# EUROPEAN PATENT APPLICATION

(11) **EP 4 406 428 A1**
(43) Date of publication of application: **31.07.2024**
(21) Application number: 21958423.2
(22) Date of filing: 24.09.2021
(51) Int. Cl.: A24F 40/40, A24F 40/50, A24F 40/90

(54) **POWER SUPPLY UNIT FOR AEROSOL GENERATION DEVICE**

(71) Applicant: Japan Tobacco, Inc., Tokyo, 105-6927 (JP)
(72) Inventor: ARADACHI, Takao, Tokyo 130-8603 (JP); AKAO, Takeshi, Tokyo 130-8603 (JP)
(74) Representative: Hoffmann Eitle
(86) International application number: PCT/JP2021/035179
(87) International publication number: WO 2023/047549

(57) **Abstract**

A power supply unit (10) for an aerosol inhaler (1) comprises: a power supply (12); a discharge terminal (41) to which is connected a heater (21) that consumes power supplied from the power supply (12) and heats an aerosol source (22); a charge terminal (43) which is connectable to an external power supply; a fourth FET (104); and a fifth FET (105) which is connected in parallel to the fourth FET (104). The fourth FET (104) and the fifth FET (105) which are connected in parallel connect the power supply (12) with the discharge terminal (41) or the charge terminal (43).

## Description

### TECHNICAL FIELD

The present invention relates to a power supply unit of an aerosol generation device.

### BACKGROUND ART

Patent Literature 1 below discloses a technique in which a converter (a back boost DC-DC converter) that receives a first voltage from a power supply and supplies a second voltage to a heating element is provided in a circuit of a carburetor device.

### CITATION LIST

### PATENT LITERATURE

Patent Literature 1: JP2021-510053A

### SUMMARY OF INVENTION

### TECHNICAL PROBLEM

In order to supply power of an external power supply to a power supply or to supply power of a power supply to a heating unit, a power supply unit of an aerosol generation device includes various elements (electronic components). Each element may generate heat when a current flows, but when a temperature of the element is high, deterioration or breakage of an electronic component provided in a power supply unit may be caused, or an operation of the power supply unit may become unstable. Therefore, it is desirable to prevent heat generation in the power supply unit of the aerosol generation device. There has been room for improvement in the related art.

The present invention provides a power supply unit of an aerosol generation device capable of preventing heat generation.

### SOLUTION TO PROBLEM

The present invention is a power supply unit of an aerosol generation device, including:
a power supply;
a heating unit connector to which a heating unit configured to heat an aerosol source by consuming power supplied from the power supply is connected;
an external power supply connector connectable to an external power supply;
a first switching element; and
a second switching element connected in parallel to the first switching element, in which
the first switching element and the second switching element connected in parallel connect the power supply and the external power supply connector or the heating unit connector.

### ADVANTAGEOUS EFFECTS OF INVENTION

According to the present invention, it is possible to provide a power supply unit of an aerosol generation device capable of preventing heat generation.

### BRIEF DESCRIPTION OF DRAWINGS

[FIG. 1] FIG. 1 is a perspective view of an aerosol inhalation device 1 according to an embodiment of the present invention.
[FIG. 2] FIG. 2 is an exploded perspective view of the aerosol inhalation device 1.
[FIG. 3] FIG. 3 is a cross-sectional view of the aerosol inhalation device 1.
[FIG. 4] FIG. 4 is a diagram showing an example of a circuit configuration of a power supply unit 10 of the aerosol inhalation device 1.
[FIG. 5] FIG. 5 is a diagram showing an example of a charging power supply system and a first MCU power supply system in the power supply unit 10.
[FIG. 6] FIG. 6 is a diagram showing an example of a heater power supply system and a second MCU power supply system in the power supply unit 10.
[FIG. 7] FIG. 7 is a diagram showing another example of the circuit configuration of the power supply unit 10 of the aerosol inhalation device 1.
[FIG. 8] FIG. 8 is a diagram showing an example of a circuit configuration of the power supply unit 10 according to a first modification.
[FIG. 9] FIG. 9 is a diagram showing another example of the circuit configuration of the power supply unit 10 according to the first modification.
[FIG. 10] FIG. 10 is a diagram showing an example of a circuit configuration of the power supply unit 10 according to a second modification.
[FIG. 11] FIG. 11 is a diagram showing another example of the circuit configuration of the power supply unit 10 according to the second modification.
[FIG. 12] FIG. 12 is a diagram showing an example of a configuration of a second aerosol inhalation device.

### DESCRIPTION OF EMBODIMENTS

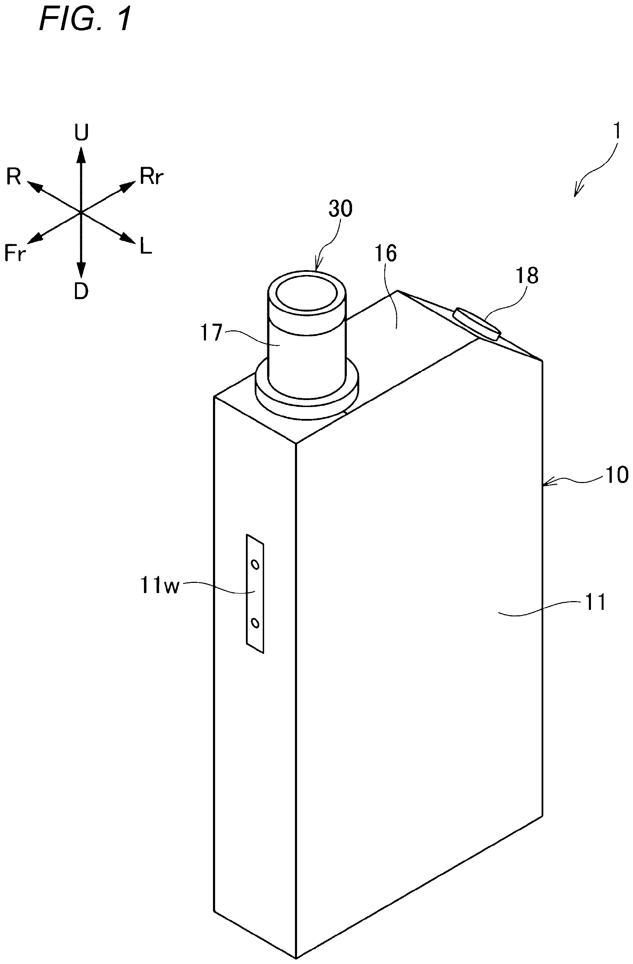

Hereinafter, a power supply unit of an aerosol generation device according to an embodiment of the present invention will be described. First, an aerosol inhalation device as an example of an aerosol generation device including a power supply unit according to the present embodiment will be described with reference to FIGs. 1 to 3. Hereinafter, the same components are denoted by the same reference numerals, and the description thereof may be omitted as appropriate.

### [First Aerosol Inhalation Device]

An aerosol inhalation device 1 is a device for generating aerosol to which flavor is added without combustion and inhaling the generated aerosol. The aerosol inhalation device 1 preferably has a size that fits in hands, and has a substantially rectangular parallelepiped shape. The aerosol inhalation device 1 may have an egg shape, an elliptical shape, or the like. In the following description, in the aerosol inhalation device 1 having a substantially rectangular parallelepiped shape, three directions orthogonal to one another are defined as an up-down direction, a front-rear direction, and a left-right direction in descending order of length. In the following description, for convenience, as shown in FIGs. 1 to 3, front, rear, left, right, upper, and lower are defined, a front side is denoted by Fr, a rear side is denoted by Rr, a left side is denoted by L, a right side is denoted by R, an upper side is denoted by U, and a lower side is denoted by D.

As shown in FIGs. 1 to 3, the aerosol inhalation device 1 includes a power supply unit 10, a first cartridge 20, and a second cartridge 30. The first cartridge 20 and the second cartridge 30 are detachable from the power supply unit 10. In other words, the first cartridge 20 and the second cartridge 30 are replaceable.

### [Power Supply Unit]

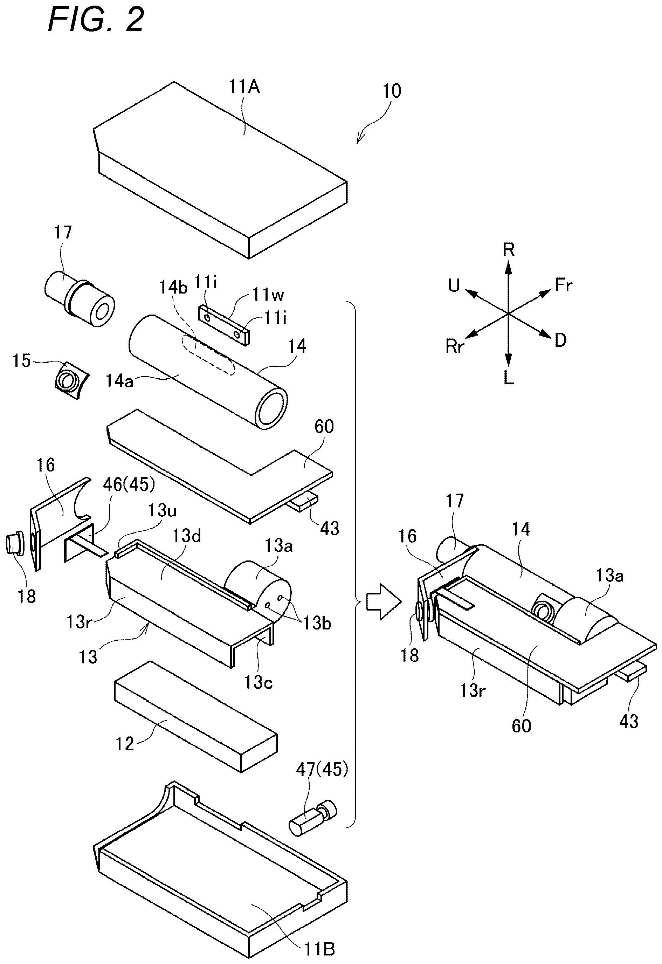

As shown in FIGS. 1 and 2, the power supply unit 10 accommodates various sensors such as a power supply 12, an inner holder 13, a circuit board 60, and an intake sensor 15 in a power supply unit case 11 having a substantially rectangular parallelepiped shape (hereinafter also referred to as the inside of the case). The power supply 12, the circuit board 60, and the like are collectively accommodated in the power supply unit case 11 to constitute the power supply unit 10, and thus a user may easily carry these components, and convenience for the user may be improved.

The power supply unit case 11 includes a first case 11A and a second case 11B that are detachable in the left-right direction (a thickness direction). By assembling the first case 11A and the second case 11B in the left-right direction, a front surface, a rear surface, a left surface, a right surface, and a lower surface of the power supply unit 10 are formed. The upper surface of the power supply unit 10 is formed by the display 16.

On the upper surface of the power supply unit 10, a mouthpiece 17 is provided in front of the display 16. The mouthpiece 17 includes a suction port 17a protruding further upward than the display 16.

An inclined surface inclined downward toward the rear is provided between the upper surface and the rear surface of the power supply unit 10. The inclined surface is provided with an operation unit 18 operable by the user. The operation unit 18 includes a button-type switch, a touch panel, or the like. As an example, the user may start up the power supply unit 10 (for example, an MCU 50 to be described later) by operating the operation unit 18.

A charging terminal 43 electrically connectable to an external power supply (not shown) is provided on the lower surface of the power supply unit 10. The charging terminal 43 is, for example, a receptacle into which a plug (not shown) provided at an end of a cable connected to the external power supply may be inserted. A receptacle into which various USB terminals (plugs) or the like is insertable may be used as the charging terminal 43. As an example, in the present embodiment, the charging terminal 43 is a USB Type-C receptacle. Accordingly, the power supply unit 10 (that is, the aerosol inhalation device 1) may be easily charged in various places, and the convenience for the user may be improved.

The charging terminal 43 may include, for example, a power receiving coil, and may wirelessly receive power transmitted from the external power supply. A method of wireless power transfer in this case may be an electromagnetic induction type, a magnetic resonance type, or a combination of the electromagnetic induction type and the magnetic resonance type. As another example, the charging terminal 43 may be connectable to at least one of various USB terminals and a Lightning terminal, and may include the above-described power receiving coil.

The inner holder 13 includes a rear wall 13r extending along the rear surface of the power supply unit 10, a central wall 13c provided in a central portion in the front-rear direction inside the case and extending parallel to the rear wall 13r, an upper wall 13u extending along the display 16 and connecting the rear wall 13r and the central wall 13c, a partition wall 13d orthogonal to the rear wall 13r, the central wall 13c, and the upper wall 13u and dividing a space defined by the rear wall 13r, the central wall 13c, and the upper wall 13u into a left space and a right space, and a cartridge holding unit 13a connected to the central wall 13c and positioned in front of the central wall 13c and above the lower surface of the power supply unit 10.

The power supply 12 is disposed in the left space of the inner holder 13. The power supply 12 is a chargeable secondary battery, an electric double-layer capacitor, or the like, and is preferably a lithium ion secondary battery. An electrolyte of the power supply 12 may be implemented by one or a combination of a gel electrolyte, an electrolyte solution, a solid electrolyte, and an ionic liquid.

The L-shaped circuit board 60 is disposed in a space formed by the right space of the inner holder 13 and a lower space formed between the cartridge holding unit 13a and the lower surface of the power supply unit 10. The circuit board 60 is implemented by stacking a plurality of layers (for example, four layers) of boards. Various electronic components for realizing various functions of the power supply unit 10, such as the MCU 50 to be described later, are mounted on the circuit board 60.

The micro controller unit (MCU) 50 is a control device (controller) that is connected to the operation unit 18, a notification unit 45, various sensor devices including the intake sensor 15 configured to detect a puff (intake) operation of the user with respect to the aerosol inhalation device 1, and the like, and performs overall control of the aerosol inhalation device 1 (power supply unit 10).

Specifically, the MCU 50 mainly includes a processor, and further includes a storage medium such as a random access memory (RAM) necessary for an operation of the processor and a read only memory (ROM) that stores various kinds of information. The processor in the present description is an electrical circuit in which circuit elements such as semiconductor devices are combined. A part (for example, the intake sensor 15) of the elements connected to the MCU 50 described above may be provided inside the MCU 50 as a function of the MCU 50.

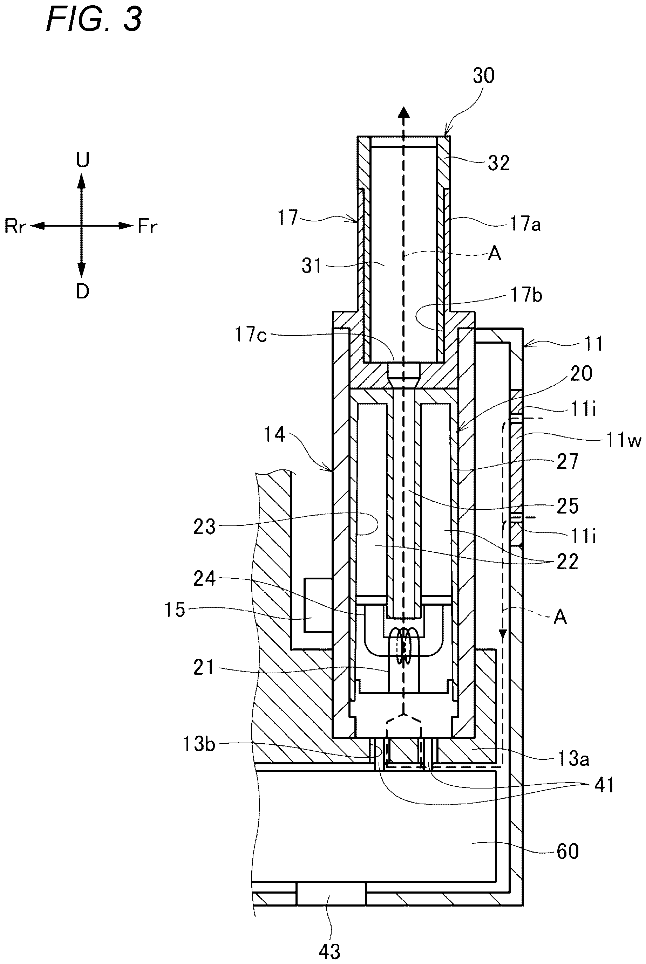

A cylindrical cartridge holder 14 for holding the first cartridge 20 is disposed in the cartridge holding unit 13a. A through hole 13b for receiving a discharge terminal 41 (see FIG. 3) provided to protrude from the circuit board 60 toward the first cartridge 20 is provided at a lower end portion of the cartridge holding unit 13a. The discharge terminal 41 is a connector to which a heater 21 provided in the first cartridge 20 is electrically connected. In addition, the discharge terminal 41 is constituted by, for example, a pin or the like in which a spring is incorporated, and the connected heater 21 may be easily removed by the user as necessary.

The through hole 13b is larger than the discharge terminal 41, and is configured to allow air to flow into the first cartridge 20 through a gap formed between the through hole 13b and the discharge terminal 41.

On an outer peripheral surface 14a of the cartridge holder 14, the intake sensor 15 that detects a puff operation is provided at a position facing the circuit board 60. The intake sensor 15 may be implemented by, for example, a condenser microphone or a pressure sensor. The cartridge holder 14 is provided with a hole 14b that is long in the up-down direction and allows a remaining amount of an aerosol source 22 stored in the first cartridge 20 to be visually checked, and the user can visually check the remaining amount of the aerosol source 22 stored in the first cartridge 20 through the hole 14b of the first cartridge 20 from the residual amount observation window 11w having transparency and provided in the power supply unit case 11.

As shown in FIG. 3, the mouthpiece 17 is detachably fixed to an upper end portion of the cartridge holder 14. The second cartridge 30 is detachably fixed to the mouthpiece 17. The mouthpiece 17 includes a cartridge accommodating portion 17b that accommodates a part of the second cartridge 30, and a communication path 17c that communicates the first cartridge 20 with the cartridge accommodating portion 17b.

The power supply unit case 11 is provided with an air intake port 11i for taking in outside air. The air intake port 11i is provided, for example, in the residual amount observation window 11w.

### [First Cartridge]

As shown in FIG. 3, the first cartridge 20 includes, in a cylindrical cartridge case 27, a reservoir 23 that stores the aerosol source 22, the heater 21 that heats the aerosol source 22, a wick 24 that draws the aerosol source 22 from the reservoir 23 to the heater 21, and an aerosol flow path 25 through which the aerosol source 22 atomized and/or vaporized (hereinafter also simply referred to as "atomizing") by being heated by the heater 21 is turned into aerosol and the aerosol flows toward the second cartridge 30.

The reservoir 23 is partitioned to surround the aerosol flow path 25 and stores the aerosol source 22. The reservoir 23 may accommodate a porous body such as a resin web or cotton, and the aerosol source 22 may be impregnated in the porous body. The reservoir 23 may store only the aerosol source 22 without accommodating the porous body on the resin web or the cotton. The aerosol source 22 contains a liquid such as glycerin, propylene glycol, and water.

The wick 24 is a liquid-holding member that draws the aerosol source 22 from the reservoir 23 to the heater 21 using a capillary action. The wick 24 is implemented by, for example, glass fiber or porous ceramic.

The heater 21 consumes power supplied from the power supply 12 via the discharge terminal 41 to heat the aerosol source 22, thereby atomizing the aerosol source 22. The heater 21 may be implemented by, for example, a heating wire (coil) wound at a predetermined pitch. A heating resistor, a ceramic heater, an induction heating heater, and the like may be used as the heater 21.

The aerosol flow path 25 is provided downstream of the heater 21 and on a center line of the first cartridge 20.

### [Second Cartridge]

The second cartridge 30 stores a flavor source 31. The second cartridge 30 is detachably accommodated in the cartridge accommodating portion 17b provided in the mouthpiece 17.

The second cartridge 30 passes the aerosol generated by atomizing the aerosol source 22 with the heater 21 through the flavor source 31 to impart flavor to the aerosol. As a raw material piece included in the flavor source 31, a compact obtained by forming cut tobacco or a tobacco raw material into a granular shape may be used. The flavor source 31 may contain plants other than tobacco (for example, mints, herbal medicines, or herbs). A fragrance such as menthol may be imparted to the flavor source 31.

The aerosol inhalation device 1 may generate (i.e., generate) an aerosol to which a flavor is added by using the aerosol source 22, the flavor source 31, and the heater 21. That is, the aerosol source 22 and the flavor source 31 constitute an aerosol generation source that generates aerosol to which flavor is imparted.

A configuration of the aerosol generation source used in the aerosol inhalation device 1 may include a configuration in which the aerosol source 22 and the flavor source 31 are separately provided, a configuration in which the aerosol source 22 and the flavor source 31 are integrally provided, a configuration in which the flavor source 31 is omitted and a substance that may be contained in the flavor source 31 is added to the aerosol source 22, a configuration in which a drug or the like is added to the aerosol source 22 instead of the flavor source 31, and the like.

In the aerosol inhalation device 1 configured as described above, as indicated by an arrow A in FIG. 3, air flowing in from the air intake port 11i provided in the power supply unit case 11 passes through the vicinity of the heater 21 of the first cartridge 20 through the gap formed between the through hole 13b and the discharge terminal 41. The heater 21 atomizes the aerosol source 22 drawn from the reservoir 23 by the wick 24. The aerosol generated by atomization flows through the aerosol flow path 25 together with the air flowing in from an intake port, and is supplied to the second cartridge 30 via the communication path 17c. The aerosol supplied to the second cartridge 30 is flavored by passing through the flavor source 31, and is supplied to the inhalation port 32.

The aerosol inhalation device 1 is provided with the notification unit 45 for giving notifications of various kinds of information. The notification unit 45 may be implemented by a light emitting element (for example, an LED), a vibration element, or a sound output element. The notification unit 45 may be a combination of two or more elements among a light emitting element, a vibration element, and a sound output element. The notification unit 45 may be provided in any of the power supply unit 10, the first cartridge 20, and the second cartridge 30, and is preferably provided in the power supply unit 10 which is not a consumable.

The aerosol inhalation device 1 (also referred to as "a first aerosol inhalation device") is a so-called low-temperature heating type aerosol inhalation device, but the present invention is also applicable to a so-called high-temperature heating type aerosol inhalation device (also referred to as "a second aerosol inhalation device"). Hereinafter, an example of a configuration of the second aerosol inhalation device will be described.

### [Second Aerosol Inhalation Device]

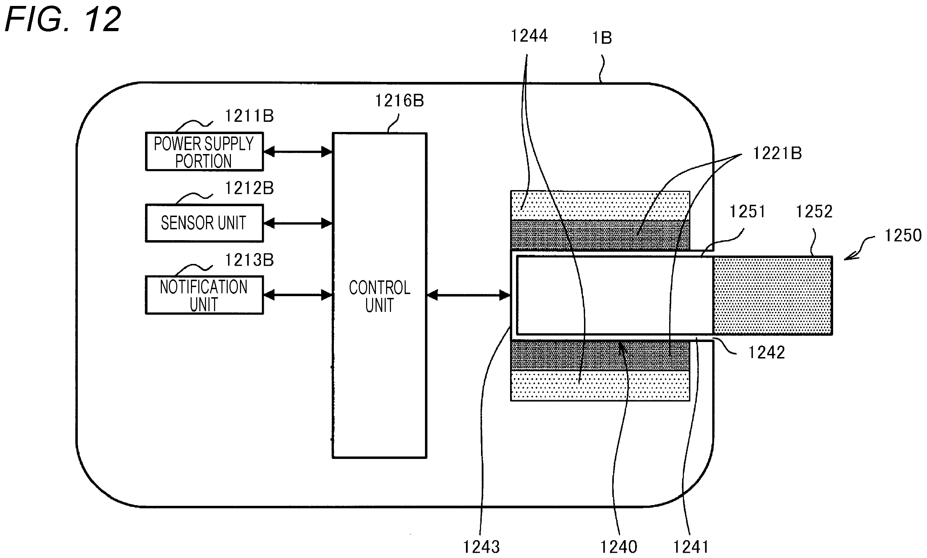

As shown in FIG. 12, an aerosol inhalation device 1B, which is an example of a second aerosol inhalation device, includes a power supply portion 1211B, a sensor unit 1212B, a notification unit 1213B, a control unit 1216B, a heating unit 1221B, a holding unit 1240, and a heat insulating unit 1244.

The power supply portion 1211B is substantially the same as the power supply 12 in the aerosol inhalation device 1 (that is, the first aerosol inhalation device). The sensor unit 1212B is substantially the same as various sensor devices including the intake sensor 15 in the aerosol inhalation device 1. The notification unit 1213B is substantially the same as the notification unit 45 in the aerosol inhalation device 1. The control unit 1216B is substantially the same as the MCU 50 in the aerosol inhalation device 1. The heating unit 1221B is substantially the same as the heater 21 in the aerosol inhalation device 1.

The holding unit 1240 has an internal space 1241, and holds a stick-type base material 1250 while accommodating a part of the stick-type base material 1250 in the internal space 1241. The holding unit 1240 has an opening 1242 through which the internal space 1241 communicates with the outside, and holds the stick-type base material 1250 inserted into the internal space 1241 from the opening 1242. For example, the holding unit 1240 is a cylindrical body having the opening 1242 and a bottom portion 1243 as a bottom surface, and defines the columnar internal space 1241. The holding unit 1240 also has a function of defining a flow path of air supplied to the stick-type base material 1250. An air inflow hole, which is an inlet of air to the flow path, is disposed, for example, in the bottom portion 1243. On the other hand, an air outlet hole, which is an outlet of air from the flow path, is the opening 1242.

The stick-type base material 1250 includes a base material portion 1251 and a suction port portion 1252. The base material portion 1251 includes an aerosol source. In this configuration example, the aerosol source is not limited to a liquid, and may be a solid. In a state where the stick-type base material 1250 is held by the holding unit 1240, at least a part of the base material portion 1251 is accommodated in the internal space 1241, and at least a part of the suction port portion 1252 protrudes from the opening 1242. When the user bites the suction port portion 1252 protruding from the opening 1242 and inhales, air flows into the internal space 1241 from an air inflow hole (not shown), and reaches the user's mouth together with the aerosol generated from the base material portion 1251.

In the example shown in FIG. 12, the heating unit 1221B is formed in a film shape, and is disposed to cover an outer periphery of the holding unit 1240. When the heating unit 1221B generates heat, the base material portion 1251 of the stick-type base material 1250 is heated from the outer periphery, and aerosol is generated.

The heat insulating unit 1244 prevents heat transfer from the heating unit 1221B to other components. For example, the heat insulating unit 1244 is made of a vacuum heat insulating material or an aerogel heat insulating material.

An example of the aerosol inhalation device 1B as the second aerosol inhalation device has been described above. It is needless to say that a configuration of the aerosol inhalation device 1B is not limited to the above, and various configurations exemplified below may be adopted.

As an example, the heating unit 1221B may be formed in a blade shape and disposed to protrude from the bottom portion 1243 of the holding unit 1240 into the internal space 1241. In this case, the blade-shaped heating unit 1221B is inserted into the base material portion 1251 of the stick-type base material 1250, and heats the base material portion 1251 of the stick-type base material 1250 from the inside. As another example, the heating unit 1221B may be disposed to cover the bottom portion 1243 of the holding unit 1240. In addition, the heating unit 1221B may be configured as a combination of two or more of a first heating unit covering the outer periphery of the holding unit 1240, a blade-shaped second heating unit, and a third heating unit covering the bottom portion 1243 of the holding unit 1240.

As another example, the holding unit 1240 may include an opening and closing mechanism such as a hinge that opens and closes a part of an outer shell forming the internal space 1241. The holding unit 1240 may open and close the outer shell to sandwich and hold the stick-type base material 1250 inserted into the internal space 1241. In this case, the heating unit 1221B may be provided at a sandwiching place in the holding unit 1240 and heat the stick-type base material 1250 while pressing the stick-type base material 1250.

In the aerosol inhalation device 1B as the second aerosol inhalation device, the aerosol inhalation device 1B itself also functions as a power supply unit.

An example of the configuration of the first aerosol inhalation device and the second aerosol inhalation device has been described above. Hereinafter, an example in which the present invention is mainly applied to the first aerosol inhalation device will be described, but the present invention may be applied to the second aerosol inhalation device.

### [Circuit Configuration of Power Supply Unit]

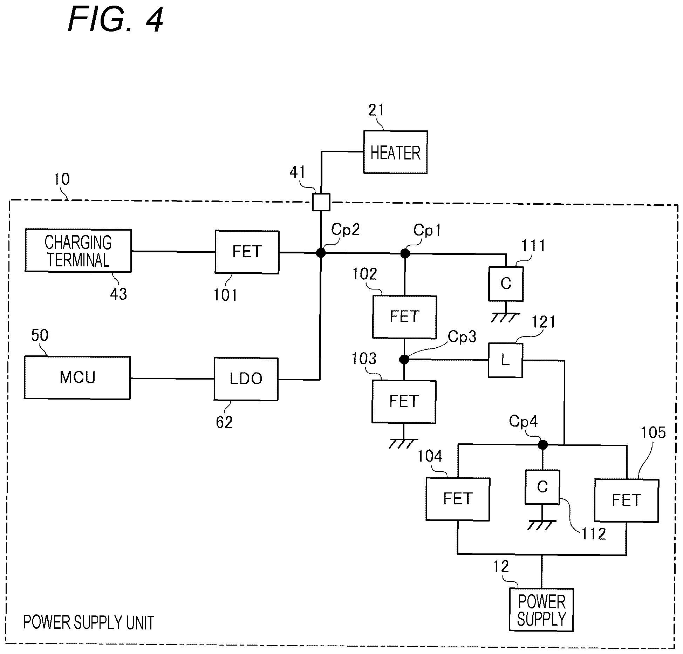

Next, an example of a circuit configuration of the power supply unit 10 will be described with reference to FIG. 4. In the following description, for simplicity of the description, a main portion for charging the power supply 12 with the power of the external power supply supplied via the charging terminal 43 and a main portion for supplying the power of the power supply 12 to the heater 21 in a circuit configuration of the power supply unit 10 will be mainly described, and illustration and description of other portions will be appropriately omitted.

As shown in FIG. 4, the power supply unit 10 includes, as main components, the power supply 12, the discharge terminal 41 as an example of a heating unit connector to which the heater 21 as an example of a heating unit is connected, the charging terminal 43 as an example of an external power supply connector connectable to the external power supply, a field effect transistor (FET) as an example of a switching element which is a semiconductor that performs switching, the MCU 50, and an LDO regulator 62 that generates power suitable for operating the MCU 50.

In the example shown in FIG. 4, the power supply unit 10 includes, as FETs, a first FET 101, a second FET 102, a third FET 103, a fourth FET 104, and a fifth FET 105 connected in parallel to the fourth FET 104.

The MCU 50 is capable of controlling an operation (that is, on/off) of each FET included in the power supply unit 10. For example, each FET included in the power supply unit 10 is a MOSFET, and the MCU 50 controls on/off of each FET by controlling a gate voltage applied to a gate terminal of each FET. Each FET included in the power supply unit 10 is not limited to a MOSFET, and may be, for example, an IGBT or a bipolar transistor.

Hereinafter, an example of an electrical connection relation of main components in the power supply unit 10 will be specifically described.

The charging terminal 43 is connected to one end of the first FET 101. The other end of the first FET 101 is connected to one end of the discharge terminal 41, an input terminal of the LDO regulator 62, and one end of the second FET 102. The other end of the discharge terminal 41 is connected to the heater 21. An output terminal of the LDO regulator 62 is connected to a power supply terminal of the MCU 50.

A first capacitor 111 is connected between the first FET 101 and the second FET 102. Specifically, one end (a high-potential-side terminal) of the first capacitor 111 is connected to a connection point Cp1 provided between the other end of the first FET 101 and one end of the second FET 102. Here, the connection point Cp1 is provided closer to the second FET 102 than a connection point Cp2, which branches from the other end of the first FET 101 toward one end of the discharge terminal 41 (in other words, to which one end of the discharge terminal 41 is connected).

The other end (a low-potential-side terminal) of the first capacitor 111 is connected to a wiring (hereinafter also referred to as a "ground line") having the same potential as a reference potential (a ground potential) in the power supply unit 10. By providing such a first capacitor 111, each of the power input from a first FET 101 side to the second FET 102 and the power output from the second FET 102 to a discharge terminal 41 side may be smoothed by the first capacitor 111.

For example, the first capacitor 111 functions as a smoothing capacitor that smooths the power input from the first FET 101 side to the second FET 102 at the time of operation of a charging power supply system to be described later. On the other hand, the first capacitor 111 functions as a smoothing capacitor that smooths the power output from the second FET 102 to the discharge terminal 41 side at the time of operation of a heater power supply system to be described later. In this way, by sharing a smoothing capacitor in different power supply systems for one first capacitor 111, the configuration of the power supply unit 10 may be simplified, and the power supply unit 10 may be reduced in size and manufacturing cost.

The other end of the second FET 102 is connected, via a reactor 121, to one ends of the fourth FET 104 and the fifth FET 105 connected in parallel. Power input to the second FET 102 from the first FET 101 side (that is, a charging terminal 43 side) may be stepped-down by the second FET 102 and the reactor 121, and the stepped-down power may be output to a fourth FET 104 and fifth FET 105 side (that is, a power supply 12 side).

The third FET 103 is connected between the other end of the second FET 102 and the reactor 121. Specifically, one end of the third FET 103 is connected to a connection point Cp3 provided between the other end of the second FET 102 and the reactor 121. That is, one end of the third FET 103 is connected, via the reactor 121, to one ends of the fourth FET 104 and the fifth FET 105 connected in parallel. The other end of the third FET 103 is connected to the ground line. Power input to the third FET 103 from the fourth FET 104 and fifth FET 105 side (that is, the power supply 12 side) may be stepped-up by the third FET 103 and the reactor 121, and the stepped-up power may be output to a second FET 102 side (that is, a discharge terminal 41 and heater 21 side).

That is, the reactor 121 is used for both the step-down by the second FET 102 and the step-up by the third FET 103. As described above, the reactor used for each of the step-down by the second FET 102 and the step-up by the third FET 103 is shared by one reactor 121, so that the configuration of the power supply unit 10 may be simplified, and the power supply unit 10 may be reduced in size and manufacturing cost.

The other ends of the fourth FET 104 and the fifth FET 105 connected in parallel are connected to the power supply 12 (strictly speaking, a + terminal of the power supply 12). A second capacitor 112 is connected between the fourth FET 104 and the fifth FET 105. Specifically, one end (a high-potential-side terminal) of the second capacitor 112 is connected to a connection point Cp4 provided between one end of the fourth FET 104 and one end of the fifth FET 105. The other end (a low-potential-side terminal) of the second capacitor 112 is connected to the ground line. By providing such a second capacitor 112, power input from a reactor 121 side to the fourth FET 104 and the fifth FET 105 and power output from the fourth FET 104 and the fifth FET 105 to the reactor 121 side may be smoothed by the second capacitor 112.

For example, the second capacitor 112 functions as a smoothing capacitor that smooths the power input from the reactor 121 side to the fourth FET 104 and the fifth FET 105 at the time of the operation of a charging power supply system to be described later. On the other hand, the second capacitor 112 functions as a smoothing capacitor that smooths the power output from the fourth FET 104 and the fifth FET 105 to the reactor 121 side at the time of the operation of a heater power supply system to be described later. In this way, by sharing a smoothing capacitor in different power supply systems for one second capacitor 112, the configuration of the power supply unit 10 may be simplified, and the power supply unit 10 may be reduced in size and manufacturing cost.

### [Power Supply System in Power Supply Unit]

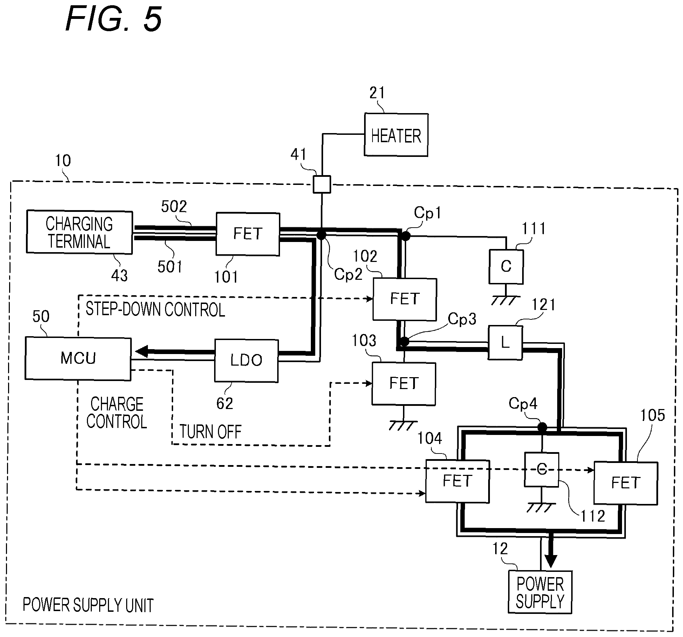

As shown in FIG. 4, in the power supply unit 10, the charging terminal 43 is connected to the power supply 12 via the first FET 101, the second FET 102, and the like. The first FET 101 and the second FET 102 constitute a charging power supply system for charging the power supply 12 with the power of the external power supply supplied via the charging terminal 43. In the example shown in FIG. 4, the fourth FET 104 and the fifth FET 105 connected in parallel are also provided between the charging terminal 43 and the power supply 12 and function to connect the charging terminal 43 and the power supply 12. Accordingly, in the example shown in FIG. 4, the fourth FET 104 and the fifth FET 105 connected in parallel also constitute the charging power supply system. Details of the charging power supply system will be described later with reference to FIG. 5 and the like.

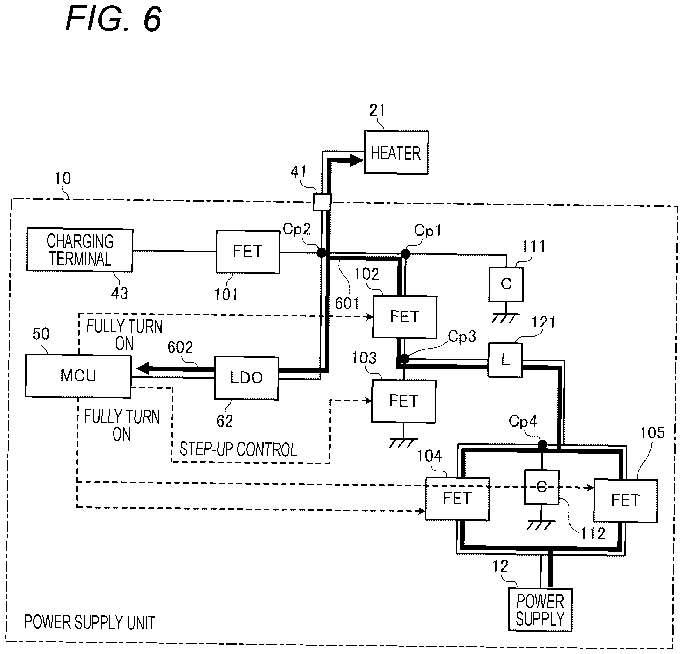

In the power supply unit 10, the discharge terminal 41 is connected to the power supply 12 via the third FET 103 and the like. The third FET 103 constitutes a heater power supply system for supplying the power of the power supply 12 to the heater 21. Details of the heater power supply system will be described later with reference to FIG. 6 and the like.

In the power supply unit 10, the MCU 50 is connected to the charging terminal 43 via the first FET 101, the LDO regulator 62, and the like. The first FET 101 and the LDO regulator 62 constitute a first MCU power supply system for operating the MCU 50 using the power of the external power supply supplied via the charging terminal 43. Details of the first MCU power supply system will be described later with reference to FIG. 5 and the like.

Furthermore, in the power supply unit 10, the MCU 50 is also connected to the power supply 12 via the second FET 102, the LDO regulator 62, and the like. The second FET 102 and the LDO regulator 62 constitute a second MCU power supply system for operating the MCU 50 using the power of the power supply 12. For example, when the power supply unit 10 operates in a case where the charging terminal 43 is not connected to the external power supply, power is supplied to the MCU 50 by the second MCU power supply system. Details of the second MCU power supply system will be described later with reference to FIG. 6 and the like.

As described above, the power supply unit 10 is provided with a plurality of power supply systems including a charging power supply system for supplying power to the power supply 12, a heater power supply system for supplying power to the heater 21, and MCU power supply systems (the first MCU power supply system and the second MCU power supply system) for supplying power to the MCU 50. Accordingly, it is possible to supply appropriate power to each load such as the power supply 12, the heater 21, and the MCU 50. For example, it is possible to supply power having a voltage value of about 3 [V] to 4 [V] to the power supply 12, supply power having a voltage value of about 5 [V] to 10 [V] to the heater 21, and supply power having a voltage value of about 3 [V] to the MCU 50. Accordingly, it is possible to efficiently charge the power supply 12 while avoiding deterioration or breakage of the power supply 12, improve the flavor of the aerosol inhalation device 1 by supplying sufficient power for generating aerosol to the heater 21, and stably operate the MCU 50.

### [First MCU Power Supply System]

Hereinafter, a specific example of each power supply system in the power supply unit 10 will be described. First, the first MCU power supply system will be described with reference to FIG. 5. For example, when the charging terminal 43 is connected to the external power supply, power is supplied to the MCU 50 from the first MCU power supply system, and the MCU 50 operates.

In FIG. 5, an arrow 501 indicates a power supply path by the first MCU power supply system. That is, in response to the charging terminal 43 being connected to the external power supply, the first FET 101 is turned on, and the power of the external power supply is supplied to the LDO regulator 62 via the first FET 101. The LDO regulator 62 generates power for operating the MCU 50 from the supplied power, and supplies the generated power to the MCU 50. Accordingly, the MCU 50 operates.

For example, the power of the external power supply supplied to the power supply unit 10 via the charging terminal 43 is USB bus power having a voltage value of about 5 [V], and the LDO regulator 62 generates power having a voltage value of about 3 [V] suitable for the operation of the MCU 50 from the supplied USB bus power.

### [Charging Power Supply System]

Next, the charging power supply system will be described with reference to FIG. 5. For example, the MCU 50 sets an operation mode of the power supply unit 10 to a charging mode in response to the charging terminal 43 being connected to the external power supply. When the operation mode of the power supply unit 10 is the charging mode, the MCU 50 operates the charging power supply system to charge the power supply 12 with the power of the external power supply.

In FIG. 5, an arrow 502 indicates a power supply path by the charging power supply system. That is, when the first FET 101 is turned on in response to the charging terminal 43 being connected to the external power supply, the power of the external power supply is also supplied to the second FET 102 via the first FET 101. The MCU 50 controls switching of the second FET 102 to step down the power input to the second FET 102.

For example, the second FET 102 steps down the USB bus power of about 5 [V], which is the power of the external power supply supplied to the power supply unit 10 via the charging terminal 43, and generates power having a voltage value of about 3 [V] to 4 [V] suitable for charging the power supply 12. When the operation mode of the power supply unit 10 is the charging mode, the MCU 50 turns off the third FET 103.

The power stepped-down by the second FET 102 is output to the fourth FET 104 and the fifth FET 105 and supplied to the power supply 12. That is, the second FET 102 constitutes a step-down circuit that steps down the power of the external power supply and outputs the stepped-down power to the power supply 12 in the charging power supply system.

The MCU 50 controls switching of the fourth FET 104 and the fifth FET 105 to control charging of the power supply 12. Here, the fourth FET 104 and the fifth FET 105 are switching elements that control a current value of power for charging the power supply 12 in the charging power supply system. For example, the MCU 50 controls the fourth FET 104 and the fifth FET 105 such that the power supply 12 is charged using a constant current charging method by adjusting a gate voltage from the start of charging until the power supply 12 reaches a predetermined charging voltage. After the power supply 12 reaches the predetermined charging voltage, the MCU 50 controls the fourth FET 104 and the fifth FET 105 such that the power supply 12 is charged using a constant voltage charging method by adjusting the gate voltage.

When the switching element is controlled to charge the power supply 12 using the constant current charging method or the constant voltage charging method, since an on-resistance is larger than that in a state where the switching element is fully turned on, heat generation in the switching element due to the on-resistance becomes large. Therefore, by controlling the power for charging the power supply 12 by a plurality of FETs connected in parallel, it is possible to charge the power supply 12 while preventing the heat generation of the plurality of FETs. This is because, when the power for charging the power supply 12 is controlled by the plurality of FETs connected in parallel, a current value of a current flowing per FET can be reduced as compared with a case where this control is performed by one FET. Since the power is proportional to the square of the current value, it is possible to effectively prevent power consumption, that is, heat generation due to an on-resistance when the power supply 12 is charged, of each FET that controls the power for charging the power supply 12.

### [Heater Power Supply System]

Next, the second MCU power supply system will be described with reference to FIG. 6. For example, the MCU 50 sets the operation mode of the power supply unit 10 to a suction mode in a case where a puff operation of the user with respect to the aerosol inhalation device 1 is detected when the charging terminal 43 is not connected to the external power supply. When the operation mode of the power supply unit 10 is the suction mode, the MCU 50 operates the heater power supply system to supply the power of the power supply 12 to the heater 21.

In FIG. 6, an arrow 601 indicates a power supply path by the heater power supply system. That is, when the puff operation of the user with respect to the aerosol inhalation device 1 is detected, the MCU 50 starts discharging from the power supply 12 in order to supply the heater 21 with power necessary for generating the aerosol. At this time, the MCU 50 fully turns on the fourth FET 104 and the fifth FET 105. Thus, on-resistances of the fourth FET 104 and the fifth FET 105 may be reduced as compared with a case where the fourth FET 104 and the fifth FET 105 are not fully turned on. Accordingly, heat generation and power loss due to the on-resistances of the fourth FET 104 and the fifth FET 105 during the suction mode (that is, at the time of the operation of the heater power supply system) may be prevented.

Power discharged from the power supply 12 is supplied to the third FET 103 via the fourth FET 104 and the fifth FET 105. The MCU 50 controls switching of the third FET 103 to step up the power input to the third FET 103. For example, power having a voltage value of about 3 [V] to 4 [V] which is an output voltage of the power supply 12 is input to the third FET 103. The third FET 103 steps up the power to generate power having a voltage value of about 5 [V] to 10 [V] suitable for the generation of aerosol by the heater 21.

The power stepped up by the third FET 103 is supplied to the heater 21 via the second FET 102 and the discharge terminal 41. That is, the third FET 103 constitutes a step-up circuit that steps up the power of the power supply 12 and outputs the stepped-up power to the heater 21 in the heater power supply system. When the power stepped up by the third FET 103 is supplied to the heater 21, the aerosol source 22 is heated by the heater 21, and aerosol is generated.

When the operation mode of the power supply unit 10 is the suction mode, the MCU 50 fully turns on the second FET 102. Accordingly, the on-resistance of the second FET 102 may be reduced as compared with a case where the second FET 102 is not fully turned on. Accordingly, heat generation and power loss due to the on-resistance of the second FET 102 during the suction mode (that is, at the time of the operation of the heater power supply system) may be prevented. When the operation mode of the power supply unit 10 is the suction mode, the MCU 50 turns off the first FET 101.

### [Second MCU Power Supply System]

Next, the second MCU power supply system will be described with reference to FIG. 6. For example, during the operation of the power supply unit 10 (including the suction mode) when the charging terminal 43 is not connected to the external power supply, power is supplied to the MCU 50 from the second MCU power supply system.

In FIG. 6, an arrow 602 indicates a power supply path by the second MCU power supply system. The second MCU power supply system is the same as the heater power supply system from the power supply 12 to the connection point Cp2. Description of this section will be omitted.

In the second MCU power supply system, the power of the power supply 12 is stepped up by the third FET 103, and the stepped-up power is supplied to the LDO regulator 62. The LDO regulator 62 generates power having a voltage value of about 3 [V] suitable for the operation of the MCU 50 from the power stepped up by the third FET 103, and supplies the generated power to the MCU 50. Accordingly, the MCU 50 operates.

As described above, by providing the fifth FET 105 connected in parallel to the fourth FET 104 connecting the power supply 12 and the charging terminal 43 in the power supply unit 10, a current flowing through the fourth FET 104 when the power supply 12 is charged with the power of the external power supply may be reduced, and the heat generation of the fourth FET 104 may be prevented. Accordingly, it is possible to avoid deterioration or breakage of electronic components of the power supply unit 10 including the fourth FET 104 due to the heat of the fourth FET 104 when the power supply 12 is charged, or to avoid an unstable operation of the power supply unit 10.

Here, the fourth FET 104 is a FET that controls a current value of the power for charging the power supply 12 in the charging power supply system. Accordingly, by providing the fifth FET 105 connected in parallel to the fourth FET 104, it is possible to reduce the current flowing through the fourth FET 104 when controlling the current value of the power for charging the power supply 12, and prevent the heat generation of the fourth FET 104.

Although an example has been described in which two FETs, that is, the fourth FET 104 and the fifth FET 105 are connected in parallel as a FET that controls the current value of the power for charging the power supply 12, three or more FETs may be connected in parallel. As the number of FETs connected in parallel is increased, the current value of the current flowing per FET may be reduced, so that the heat generation-preventing effect may be further improved.

In a case where the power for charging the power supply 12 is controlled by the plurality of FETs such as the fourth FET 104 and the fifth FET 105, the number of FETs that operate when the power supply 12 is charged is increased as compared with a case where the control is performed by one FET, and thus the power consumption of the power supply unit 10 may be increased.

From the viewpoint of preventing an increase in power consumption in the power supply unit 10, the MCU 50 may change, according to the power for charging the power supply 12, the number of FETs to be operated among the plurality of FETs connected in parallel in order to control the power for charging the power supply 12.

For example, the MCU 50 operates only one of the fourth FET 104 and the fifth FET 105 connected in parallel when the power for charging the power supply 12 is relatively small (for example, when the power is equal to or smaller than a preset first threshold), and operates both the fourth FET 104 and the fifth FET 105 connected in parallel when the power for charging the power supply 12 is relatively large (for example, when the power is larger than the first threshold). In this way, by changing, according to the power for charging the power supply 12, the number of FETs to be operated among the plurality of FETs connected in parallel in order to control the power for charging the power supply 12, it is possible to operate an appropriate number of FETs when charging the power supply 12. Accordingly, it is possible to prevent the fourth FET 104 and the fifth FET 105 from being high temperature when charging the power supply 12 while preventing an increase in power consumption of the power supply unit 10, and it is possible to reduce the risk of the degradation or breakage of electronic components provided in the power supply unit 10 or an unstable operation of the power supply unit 10.

If the power supply 12 is charged with large power (for example, a large current) when a temperature of the power supply 12 is low, the power supply 12 may deteriorate remarkably. From the viewpoint of preventing deterioration of the power supply 12, the power supply unit 10 may charge the power supply 12 with first power when the temperature of the power supply 12 is equal to or lower than a threshold (for example, 0°C), and may charge the power supply 12 with second power larger than the first power when the temperature of the power supply 12 is higher than the threshold. For example, the MCU 50 may operate only one of the fourth FET 104 and the fifth FET 105 connected in parallel when the power supply 12 is charged with the first power, and may operate both the fourth FET 104 and the fifth FET 105 connected in parallel when the power supply 12 is charged with the second power. Accordingly, it is possible to charge the power supply 12 with appropriate power according to the temperature of the power supply 12, and it is possible to avoid deterioration of the power supply 12 caused by charging the power supply 12 with large power when the temperature of the power supply 12 is low. In addition, it is possible to operate an appropriate number of FETs according to the power for charging the power supply 12 when charging the power supply 12, it is possible to prevent the fourth FET 104 and the fifth FET 105 from being high in temperature when charging the power supply 12 while preventing an increase in power consumption of the power supply unit 10, and it is possible to reduce the risk of the degradation or breakage of electronic components provided in the power supply unit 10 or an unstable operation of the power supply unit 10.

If the charging terminal 43 is connected to the external power supply when the output voltage of the power supply 12 is low, a large current as an inrush current flows to the power supply unit 10, and the power supply unit 10 may be damaged. From the viewpoint of protecting the power supply unit 10 from the inrush current, the power supply unit 10 may charge the power supply 12 with the first power (specifically, perform the pre-charge using a small current) when the output voltage of the power supply 12 is equal to or smaller than a threshold (for example, 3 [V]), and charge the power supply 12 with the second power larger than the first power when the output voltage of the power supply 12 is higher than the threshold. For example, the MCU 50 may operate only one of the fourth FET 104 and the fifth FET 105 connected in parallel when the power supply 12 is charged with the first power (that is, when the pre-charge is being performed), and may operate both the fourth FET 104 and the fifth FET 105 connected in parallel when the power supply 12 is charged with the second power. Accordingly, the power supply 12 may be charged with appropriate power corresponding to the output voltage of the power supply 12, and the power supply unit 10 may be protected from the inrush current. In addition, it is possible to operate an appropriate number of FETs according to the power for charging the power supply 12 when charging the power supply 12, it is possible to prevent the fourth FET 104 and the fifth FET 105 from being high in temperature when charging the power supply 12 while preventing an increase in power consumption of the power supply unit 10, and it is possible to reduce the risk of the degradation or breakage of electronic components provided in the power supply unit 10 or an unstable operation of the power supply unit 10.

Further, when the plurality of FETs connected in parallel are provided in the power supply unit 10, at least one FET among the plurality of FETs may be provided in the power supply unit 10 as an integrated circuit (IC), and the remaining FETs among the plurality of FETs may be provided in the power supply unit 10 separately from the IC.

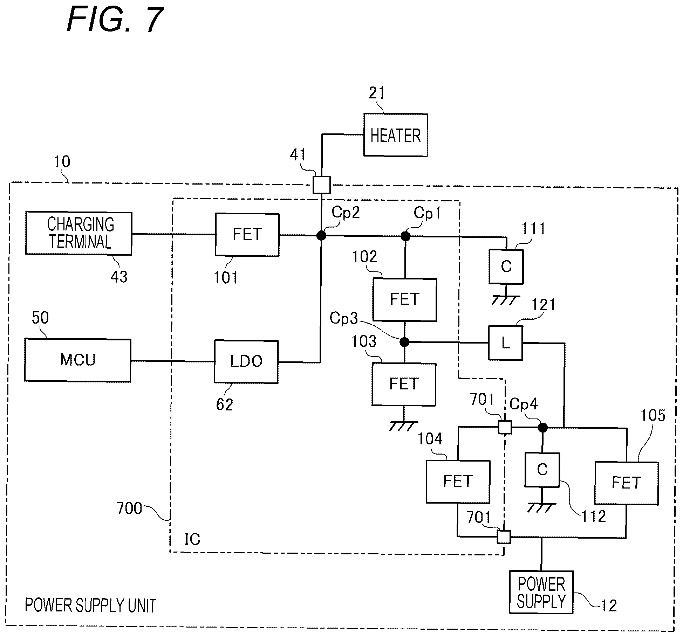

It is assumed that, for example, among the fourth FET 104 and the fifth FET 105, the fourth FET 104 is provided in the IC and mounted on the power supply unit 10, and the fifth FET 105 is mounted on the power supply unit 10 separately from the IC. In this case, as shown in FIG. 7, the power supply unit 10 includes an IC 700 including the fourth FET 104.

Specifically, in the example shown in FIG. 7, the IC 700 includes FETs other than the fifth FET 105, the LDO regulator 62, a terminal 701 connectable to a FET provided outside the IC 700, and the like, and is mounted on the circuit board 60 of the power supply unit 10. The fifth FET 105 provided outside the IC 700 (for example, directly mounted on the circuit board 60 of the power supply unit 10) is connected to the terminal 701 of the IC 700. Thus, when the fifth FET 105 is connected to the terminal 701, the IC 700 connects the fifth FET 105 connected to the terminal 701 and the fourth FET 104 provided inside the IC 700 in parallel. In other words, the terminal 701 is provided such that the FET outside the IC 700 connectable to the terminal 701 and the fourth FET 104 provided inside the IC 700 are connected in parallel.

As shown in FIG. 7, by providing the IC 700 including the fourth FET 104 with the terminal 701 which enables the FET provided outside the IC 700 to be connected in parallel with the fourth FET 104, a manufacturer of the aerosol inhalation device 1 can easily provide a FET connected in parallel with the fourth FET 104 such as the fifth FET 105 described above in the power supply unit 10 as necessary. Accordingly, an appropriate number of FETs may be easily mounted on the power supply unit 10 according to the specifications of the power supply unit 10 or the like.

As an example, when the power supply unit 10 is configured such that the power supplied to the heater 21 is relatively large, it is assumed that a temperature of the fourth FET 104 becomes high unless the fifth FET 105 connected in parallel to the fourth FET 104 is provided. In such a case, the manufacturer of the aerosol inhalation device 1 adds the FET connected in parallel to the fourth FET 104 such as the fifth FET 105 to the power supply unit 10. Therefore, it is possible to prevent the fourth FET 104 from being high in temperature, and reduce the risk of the degradation or breakage of electronic components provided in the power supply unit 10 or an unstable operation of the power supply unit 10.

On the other hand, when the power supply unit 10 is configured such that the power supplied to the heater 21 is relatively small, it is considered that the temperature of the fourth FET 104 does not become so high even when the fifth FET 105 connected in parallel to the fourth FET 104 is not provided, and the risk of the degradation or breakage of electronic components provided in the power supply unit 10 or an unstable operation of the power supply unit 10 is considered to be relatively low. Accordingly, in such a case, the manufacturer of the aerosol inhalation device 1 does not provide the FET connected in parallel with the fourth FET 104 such as the fifth FET 105 described above in the power supply unit 10, therefore, the configuration of the power supply unit 10 may be simplified, and the power supply unit 10 may be reduced in size and manufacturing cost.

More specifically, in general, the power supplied to the heating unit is larger in the second aerosol inhalation device than in the first aerosol inhalation device. Therefore, when the fifth FET 105 connected in parallel to the fourth FET 104 is not provided in the second aerosol inhalation device, the temperature of the fourth FET 104 becomes high, and electronic components provided in the power supply unit 10 may be deteriorated or damaged, or an operation of the power supply unit 10 may become unstable. Accordingly, in the second aerosol inhalation device, it is preferable to provide the fifth FET 105 connected in parallel to the fourth FET 104.

On the other hand, even when the fifth FET 105 connected in parallel to the fourth FET 104 is not provided in the first aerosol inhalation device, the temperature of the fourth FET 104 does not become so high. Therefore, the risk of the deterioration or breakage of electronic components provided in the power supply unit 10 or an unstable operation of the power supply unit 10 is considered to be relatively low. In view of the manufacturing cost and the like, it is preferable not to provide the fifth FET 105 connected in parallel to the fourth FET 104 in the first aerosol inhalation device.

Therefore, by producing an IC in which an external FET (external FET) can be connected in parallel to the fourth FET 104 as in the IC 700, and adding an external FET connected in parallel to the fourth FET 104 only in a case of the second aerosol inhalation device, even when the IC employed in the first aerosol inhalation device and the second aerosol inhalation device is shared, an appropriate number of FETs may be easily mounted in each aerosol inhalation device. Therefore, it is not necessary to individually produce different ICs for the first aerosol inhalation device and the second aerosol inhalation device, and it is possible to reduce the cost and labor for manufacturing these aerosol inhalation devices.

By integrating a FET connecting the power supply 12 and the charging terminal 43 or the discharge terminal 41 with other electronic components included in the power supply unit 10 and mounting the FET on the circuit board 60 of the power supply unit 10, it is possible to mount the FET on the circuit board 60 in a space-saving manner as compared with a case where the FET is individually mounted on the circuit board 60, and it is possible to reduce a size of the circuit board 60 (that is, the power supply unit 10). Furthermore, by integrating the FET connecting the power supply 12 and the charging terminal 43 or the discharge terminal 41 with other electronic components included in the power supply unit 10 and mounting the FET on the circuit board 60 of the power supply unit 10, it is also possible to simplify a mounting operation as compared with the case where the FET is individually mounted on the circuit board 60.

In the example shown in FIG. 7, the MCU 50 is provided outside the IC 700, and the IC 700 may further include the MCU 50. In this way, the MCU 50 that controls the fourth FET 104 may also be easily mounted on the power supply unit 10.

### [Modification]

Next, modifications of the above-described embodiment will be described. In the following description, the same components as those of the above-described embodiment are denoted by the same reference numerals, and the description thereof is appropriately omitted.

In the example shown in FIG. 4, the fifth FET 105 connected in parallel to the fourth FET 104 is provided, but the prevent invention is not limited thereto. Instead of or in addition to the fifth FET 105, a FET connected in parallel with a FET other than the fourth FET 104 may be provided.

### [First Modification]

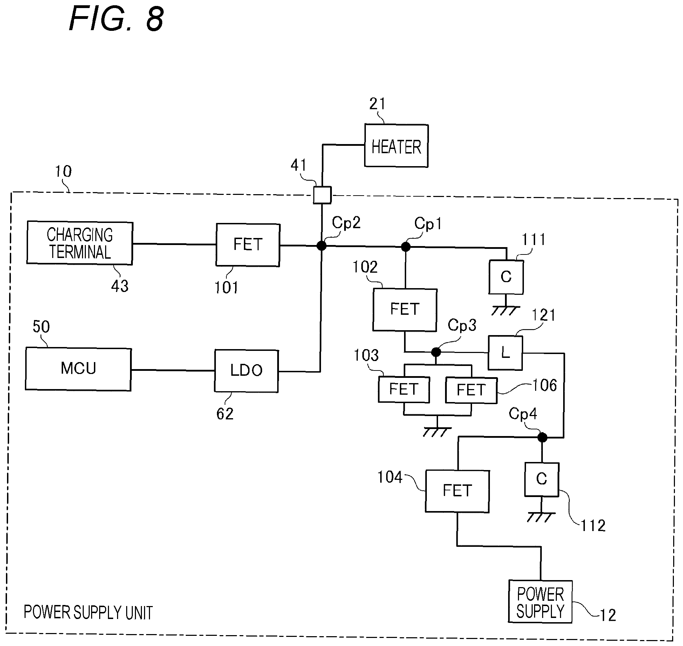

In a first modification, as shown in FIG. 8, a sixth FET 106 connected in parallel to the third FET 103 may be provided. For example, in an aerosol inhalation device such as the first aerosol inhalation device in which the power supplied to the heating unit is relatively small, a temperature of the third FET 103 does not become so high even when the sixth FET 106 connected in parallel to the third FET 103 is not provided. On the other hand, in an aerosol inhalation device such as the second aerosol inhalation device in which the power supplied to the heating unit is relatively large, when the sixth FET 106 connected in parallel to the third FET 103 is not provided, the temperature of the third FET 103 becomes high, and electronic components provided in the power supply unit 10 may be deteriorated or damaged, or an operation of the power supply unit 10 may become unstable. Therefore, in the case of the first aerosol inhalation device, the sixth FET 106 connected in parallel to the third FET 103 may not be provided, and in the case of the second aerosol inhalation device, the sixth FET 106 connected in parallel to the third FET 103 may be provided.

In the example shown in FIG. 8, one ends of the third FET 103 and the sixth FET 106 connected in parallel are connected to one end of the fourth FET 104 via the reactor 121. The other ends of the third FET 103 and the sixth FET 106 are connected to the ground line. By providing the third FET 103, the sixth FET 106, and the reactor 121, it is possible to step up the power input from a fourth FET 104 side (that is, the power supply 12 side) to the third FET 103 and the sixth FET 106, and output the stepped-up power to the second FET 102 side (that is, the discharge terminal 41 side).

In the first modification, the MCU 50 controls the third FET 103 and the sixth FET 106 connected in parallel, for example, in the same manner as the third FET 103 in the above-described embodiment. That is, the third FET 103 and the sixth FET 106 are switched when the power of the power supply 12 is supplied to the heater 21 or the MCU 50 (for example, at the operation of the heater power supply system or at the operation of the second MCU power supply system), step up the input power, and output the stepped-up power to the second FET 102 side (that is, the discharge terminal 41 side).

That is, the third FET 103 and the sixth FET 106 in the first modification constitute a step-up circuit that steps up the power of the power supply 12 and outputs the stepped-up power to the heater 21 in the heater power supply system. The third FET 103 and the sixth FET 106 are turned off when the power supply 12 is charged (that is, at the time of the operation of the charging power supply system).

When a switching element constitutes a step-up circuit that steps up the power of the power supply 12 and outputs the stepped-up power to the heater 21 in the heater power supply system, a switching operation is continuously performed, and thus heat generation due to a surge current at the time of switching becomes large. Therefore, by stepping up the power of the power supply 12 by the plurality of FETs connected in parallel, it is possible to step up the power of the power supply 12 while preventing the heat generation of the plurality of FETs. This is because, when the power of the power supply 12 is stepped up by the plurality of FETs connected in parallel, a current value of a current flowing per FET at the time of switching accompanying the step-up may be reduced as compared with a case where the step-up is performed by one FET. Therefore, a surge current at the time of switching may be reduced, and heat generation of each FET due to the surge current may be prevented. Accordingly, in the example shown in FIG. 8, while preventing the heat generation of the third FET 103 and the sixth FET 106, the power of the power supply 12 may be further stepped up by the third FET 103 and the sixth FET 106, and power sufficient for generating the aerosol may be supplied to the heater 21.

Although an example has been described in which two FETs, that is, the third FET 103 and the sixth FET 106 are connected in parallel as FETs constituting a step-up circuit that steps up the power of the power supply 12 and outputs the stepped-up power to the heater 21, three or more FETs may be connected in parallel. As the number of FETs connected in parallel is increased, the current value of the current flowing per FET may be reduced, so that the heat generation-preventing effect may be further improved.

The MCU 50 may change the number of FETs to be operated according to the power supplied to the heater 21. For example, the power supply unit 10 may supply the first power to the heater 21 during a predetermined period immediately after startup and supply the second power smaller than the first power to the heater 21 after the elapse of the predetermined period in order to quickly generate the aerosol when the power supply unit 10 is started up. For example, the MCU 50 operates both the third FET 103 and the sixth FET 106 connected in parallel when the first power is supplied to the heater 21, and operates only one of the third FET 103 and the sixth FET 106 connected in parallel when the second power is supplied to the heater 21. Accordingly, when the power supply unit 10 is started up, the aerosol may be quickly generated, and the convenience for the user may be improved. In addition, it is possible to operate an appropriate number of FETs according to the power supplied to the heater 21 when supplying the power to the heater 21, it is possible to prevent the third FET 103 and the sixth FET 106 from being high in temperature when supplying the power to the heater 21 while preventing an increase in power consumption of the power supply unit 10, and it is possible to reduce the risk of the degradation or breakage of electronic components provided in the power supply unit 10 or an unstable operation of the power supply unit 10.

The power supplied to the heater 21 at each time after the startup may be stored in advance in the MCU 50 as a control profile, or may be appropriately calculated by the MCU 50 based on the temperature of the heater 21 or the like at that time.

Generally, in the case of the second aerosol inhalation device, a control profile (hereinafter, also referred to as a "heating profile") for controlling the heating of an aerosol source by the heater 21 (the heating unit 1221B) is stored in advance in the MCU 50 (the control unit 1216B), and the MCU 50 controls the power supply to the heater 21 according to the heating profile. Here, the heating profile is, for example, information defining a time-series transition of a target temperature of the heater 21. The MCU 50 supplies the power from the power supply 12 to the heater 21 in a pulse form by pulse width modulation (PWM) or pulse frequency modulation (PFM). The MCU 50 adjusts the power supplied to the heater 21 by adjusting a duty ratio of the power supplied to the heater 21 based on a difference between the temperature of the heater 21 and the target temperature.

According to the heating control using the heating profile, for example, the heater 21 is controlled to increase in temperature toward a first temperature during a first period immediately after the start of heating, the heater 21 is controlled to maintain the first temperature during a second period after the first period, the heater 21 is controlled to decrease in temperature to a second temperature lower than the first temperature during a third period after the second period, the heater 21 is controlled to maintain the second temperature during a fourth period after the third period, and the heater 21 is controlled to increase in temperature to a third temperature higher than the second temperature during a fifth period after the fourth period.

During the first period or the fifth period, the power supplied to the heater 21 is relatively large in order to increase the heater 21 in temperature. Here, the MCU 50 may increase the number of FETs to be operated during the first period or the fifth period as compared with other periods (the second period, the third period, and the fourth period). Specifically, for example, the MCU 50 may operate both the third FET 103 and the sixth FET 106 connected in parallel during the first period or the fifth period, and may operate only one of the third FET 103 and the sixth FET 106 connected in parallel during the other periods.

When the power supply unit 10 includes the fifth FET 105 connected in parallel to the fourth FET 104 as described above, the MCU 50 may change the number of FETs to be operated according to the power supplied to the heater 21. For example, the MCU 50 may operate both the fourth FET 104 and the fifth FET 105 when the power supplied to the heater 21 is relatively large, and may operate only one of the fourth FET 104 and the fifth FET 105 when the power supplied to the heater 21 is relatively small. Specifically, for example, the MCU 50 may operate both the fourth FET 104 and the fifth FET 105 connected in parallel during the first period or the fifth period, and may operate only one of the third FET 103 and the sixth FET 106 connected in parallel during the other periods.

When the power supply unit 10 includes the seventh FET 107 connected in parallel to the second FET 102 as in a second modification to be described later, the MCU 50 may change the number of FETs to be operated according to the power supplied to the heater 21. For example, the MCU 50 may operate both the second FET 102 and the seventh FET 107 when the power supplied to the heater 21 is relatively large, and may operate only one of the second FET 102 and the seventh FET 107 when the power supplied to the heater 21 is relatively small. Specifically, for example, the MCU 50 may operate both the second FET 102 and the seventh FET 107 connected in parallel during the first period or the fifth period, and may operate only one of the second FET 102 and the seventh FET 107 connected in parallel during the other periods.

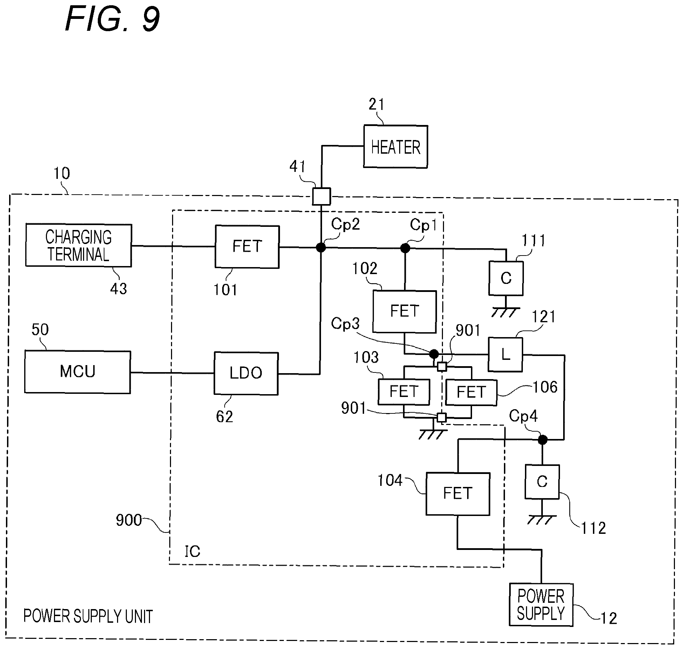

For example, among the third FET 103 and the sixth FET 106 described above, the third FET 103 may be provided as an IC in the power supply unit 10, and the sixth FET 106 may be provided separately from the IC in the power supply unit 10. In this case, as shown in FIG. 9, the power supply unit 10 includes an IC 900 including the third FET 103.

Specifically, in the example shown in FIG. 9, the IC 900 includes FETs other than the sixth FET 106, the LDO regulator 62, a terminal 901 connectable to a FET provided outside the IC 900, and the like, and is mounted on the circuit board 60 of the power supply unit 10. The sixth FET 106 provided outside the IC 900 (for example, directly mounted on the circuit board 60 of the power supply unit 10) is connected to the terminal 901 of the IC 900. Thus, when the sixth FET 106 is connected to the terminal 901, the IC 900 connects the sixth FET 106 connected to the terminal 901 and the third FET 103 provided inside the IC 900 in parallel. In other words, the terminal 901 is provided such that the FET outside the IC 900 connectable to the terminal 901 and the third FET 103 provided inside the IC 900 are connected in parallel.

As shown in FIG. 9, by providing the IC 900 including the third FET 103 with the terminal 901 which enables the FET provided outside the IC 900 to be connected in parallel with the third FET 103, the manufacturer of the aerosol inhalation device 1 may easily provide a FET connected in parallel with the third FET 103 such as the sixth FET 106 in the power supply unit 10 as necessary. Accordingly, an appropriate number of FETs may be easily mounted on the power supply unit 10 according to the specifications of the power supply unit 10 or the like.

For example, as described above, the power supplied to the heater 21 is relatively larger in the second aerosol inhalation device than in the first aerosol inhalation device. Therefore, when the power supply unit 10 is implemented as a power supply unit of the second aerosol inhalation device, it is assumed that a temperature of the FET constituting a step-up circuit becomes high only by the third FET 103. In such a case, the manufacturer of the aerosol inhalation device 1 adds the FET connected in parallel to the third FET 103 such as the sixth FET 106 to the power supply unit 10. Therefore, it is possible to prevent the third FET 103 from being high in temperature when power is supplied to the heater 21, and reduce the risk of the degradation or breakage of electronic components provided in the power supply unit 10 or an unstable operation of the power supply unit 10.

On the other hand, when the power supply unit 10 is implemented as a power supply unit of the first aerosol inhalation device in which the power supplied to the heater 21 is smaller than that in the second aerosol inhalation device, it is considered that a temperature of a FET constituting a step-up circuit does not become so high even by the third FET 103 alone, and the risk of deterioration or breakage of electronic components provided in the power supply unit 10 or an unstable operation of the power supply unit 10 is considered to be relatively low. Accordingly, in such a case, the manufacturer of the aerosol inhalation device 1 does not provide the FET connected in parallel with the third FET 103 such as the sixth FET 106 described above in the power supply unit 10, therefore, the configuration of the power supply unit 10 may be simplified, and the power supply unit 10 may be reduced in size and manufacturing cost.

In the example shown in FIG. 9, the MCU 50 is provided outside the IC 900, and the IC 900 may further include the MCU 50. In this way, the MCU 50 that controls the third FET 103 may also be easily mounted on the power supply unit 10.

### [Second Modification]

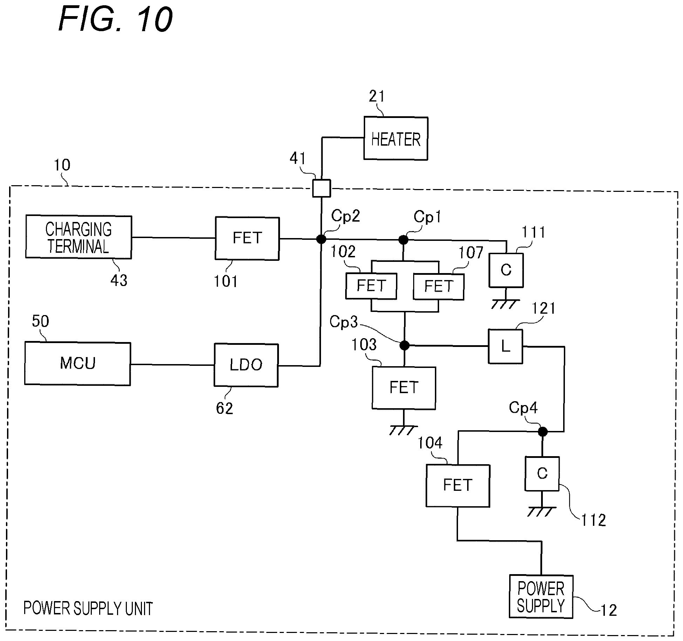

In the second modification, as shown in FIG. 10, the seventh FET 107 connected in parallel to the second FET 102 may be provided. In the example shown in FIG. 10, one ends of the second FET 102 and the seventh FET 107 connected in parallel are respectively connected to the other end of the first FET 101, one end of the discharge terminal 41, and the input terminal of the LDO regulator 62. The other ends of the second FET 102 and the seventh FET 107 are connected to one end of the fourth FET 104 via the reactor 121. By providing the second FET 102, the seventh FET 107, and the reactor 121, it is possible to step down the power input to the second FET 102 and the seventh FET 107 from the first FET 101 side (that is, the charging terminal 43 side) and output the stepped-down power to the fourth FET 104 side (that is, the power supply 12 side).

In the second modification, the MCU 50 controls the second FET 102 and the seventh FET 107 connected in parallel, for example, in the same manner as the second FET 102 in the above-described embodiment. That is, the second FET 102 and the seventh FET 107 are switched when the power supply 12 is charged (that is, at the time of the operation of the charging power supply system), step down the input power, and output the stepped-down power to the fourth FET 104 side (that is, the power supply 12 side).

That is, the second FET 102 and the seventh FET 107 in the second modification constitute a step-down circuit that steps down the power of the external power supply and outputs the stepped-down power to the power supply 12 in the charging power supply system. The second FET 102 and the seventh FET 107 are fully turned on when the power of the power supply 12 is supplied to the heater 21 or the MCU 50 (for example, at the time of the operation of the heater power supply system or at the time of the operation of the second MCU power supply system).

When the switching element constitutes a step-down circuit that steps down the power of the external power supply and outputs the step-down power to the power supply 12 in the charging power supply system, a switching operation is continuously performed, and thus heat generation due to a surge current at the time of switching becomes large. Therefore, by stepping down the power of the external power supply by the plurality of FETs connected in parallel, it is possible to step down the power of the external power supply while preventing the heat generation of the plurality of FETs. This is because, when the power of the external power supply is stepped down by the plurality of FETs connected in parallel, a current value of a current flowing per FET at the time of switching accompanying the step-down may be reduced as compared with a case where the step-down is performed by one FET. Therefore, a surge current at the time of switching may be reduced, and heat generation of each FET due to the surge current may be prevented. Accordingly, in the example shown in FIG. 10, while preventing the heat generation of the second FET 102 and the seventh FET 107, the power of the external power supply may be further stepped down by the second FET 102 and the seventh FET 107, and power having a voltage value suitable for charging the power supply 12 may be supplied to the power supply 12.

In the example shown in FIG. 10, the second FET 102 and the seventh FET 107 connected in parallel are also positioned between the power supply 12 and the discharge terminal 41, and are fully turned on when the power of the power supply 12 is supplied to the heater 21 and the like. Accordingly, the on-resistances of the second FET 102 and the seventh FET 107 when the power of the power supply 12 is supplied to the heater 21 and the like may be reduced, and the heat generation and the power loss due to the on-resistance may be prevented. In the example shown in FIG. 10, since a current value of a current flowing through the second FET 102 when the power of the power supply 12 is supplied to the heater 21 or the like may be reduced as compared with the example shown in FIG. 4 or the like, the on-resistance of the second FET 102 may be reduced, and the heat generation and the power loss due to the on-resistance may be prevented.

Although an example has been described in which two FETs, that is, the second FET 102 and the seventh FET 107 are connected in parallel as the FETs constituting a step-down circuit that steps down the power of the external power supply and outputs the stepped-down power to the power supply 12, three or more FETs may be connected in parallel. As the number of FETs connected in parallel is increased, the current value of the current flowing per FET may be reduced, so that the heat generation-preventing effect may be further improved.

When the power supply unit 10 includes the seventh FET 107 connected in parallel to the second FET 102, the MCU 50 may change the number of FETs to be operated according to the power for charging the power supply 12 or the power supplied to the heater 21. For example, the MCU 50 may operate both the second FET 102 and the seventh FET 107 when the power for charging the power supply 12 or the power supplied to the heater 21 is relatively large (for example, when the power is larger than the preset first threshold), and may operate only one of the second FET 102 and the seventh FET 107 when the power for charging the power supply 12 or the power supplied to the heater 21 is relatively small (for example, when the power is equal to or smaller than the first threshold).

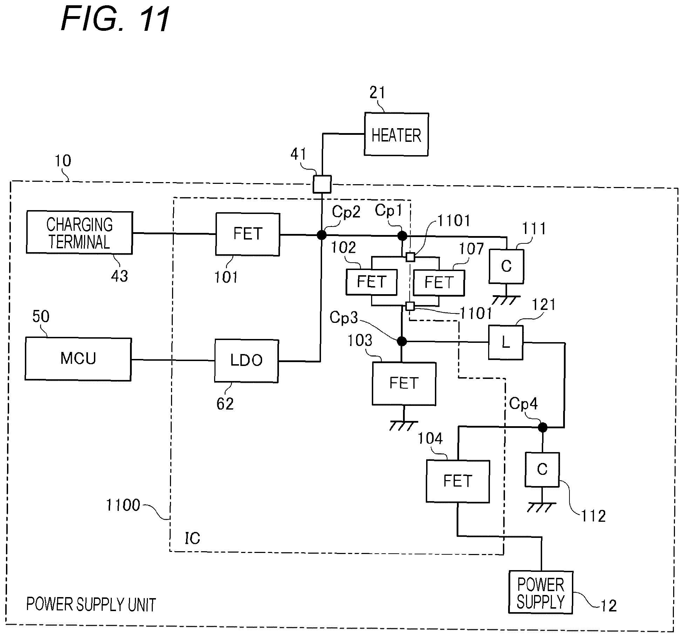

For example, among the second FET 102 and the seventh FET 107 described above, the second FET 102 may be provided as an IC in the power supply unit 10, and the seventh FET 107 may be provided separately from the IC in the power supply unit 10. In this case, as shown in FIG. 11, the power supply unit 10 includes an IC 1100 including the second FET 102.

Specifically, in the example shown in FIG. 11, the IC 1100 includes FETs other than the seventh FET 107, the LDO regulator 62, a terminal 1101 connectable to a FET provided outside the IC 1100, and the like, and is mounted on the circuit board 60 of the power supply unit 10. The seventh FET 107 provided outside the IC 1100 (for example, directly mounted on the circuit board 60 of the power supply unit 10) is connected to the terminal 1101 of the IC 1100. Thus, when the seventh FET 107 is connected to the terminal 1101, the IC 1100 connects the seventh FET 107 connected to the terminal 1101 and the second FET 102 provided inside the IC 1100 in parallel. In other words, the terminal 1101 is provided such that the FET outside the IC 1100 connectable to the terminal 1101 and the second FET 102 provided inside the IC 1100 are connected in parallel.

As shown in FIG. 11, by providing the IC 1100 including the second FET 102 with the terminal 1101 which enables the FET provided outside the IC 1100 to be connected in parallel with the second FET 102, a manufacturer of the aerosol inhalation device 1 may easily provide a FET connected in parallel with the second FET 102 such as the seventh FET 107 described above in the power supply unit 10 as necessary. Accordingly, an appropriate number of FETs may be easily mounted on the power supply unit 10 according to the specifications of the power supply unit 10 or the like.

In the example shown in FIG. 11, the MCU 50 is provided outside the IC 1100, and the IC 1100 may further include the MCU 50. In this way, the MCU 50 that controls the second FET 102 may also be easily mounted on the power supply unit 10.

Although various embodiments of the present invention have been described above with reference to the drawings, it is needless to say that the present invention is not limited to these examples. It is apparent to those skilled in the art that various changes and modifications may be conceived within the scope described in the claims, and it is understood that the changes and the modifications naturally fall within the technical scope of the present invention.

For example, in the embodiment, an example has been described in which the heater 21 is a heating unit that consumes power supplied from the power supply 12 to generate aerosol from an aerosol source, and power is supplied from the discharge terminal 41 of the power supply unit 10 to the heater 21, but the present invention is not limited thereto. For example, the heating unit that generates the aerosol may include a susceptor built in the first cartridge 20 or the like and an induction heating coil that transmits power to the susceptor by electromagnetic induction. When the heating unit includes the susceptor and the induction heating coil, the discharge terminal 41 of the power supply unit 10 is connected to the induction heating coil and supplies power to the induction heating coil.

In the present description, at least the following matters are described. In parentheses, corresponding constituent components and the like in the embodiment described above are indicated, but the present invention is not limited thereto.
(1) A power supply unit of an aerosol generation device, including:
   a power supply (power supply 12);
   a heating unit connector (discharge terminal 41) to which a heating unit (heater 21) configured to heat an aerosol source (aerosol source 22) by consuming power supplied from the power supply is connected;
   an external power supply connector (discharge terminal 43) connectable to an external power supply;
   a first switching element (second FET 102, third FET 103, fourth FET 104); and
   a second switching element (fifth FET105, sixth FET 106, seventh FET 107) connected in parallel to the first switching element, in which
   the first switching element and the second switching element connected in parallel connect the power supply and the external power supply connector or the heating unit connector.

   According to (1), the second switching element is connected in parallel to the first switching element that connects the power supply and the external power supply connector or the heating unit connector. Accordingly, when the power supply is charged with the power of the external power supply or when the power of the power supply is supplied to the heating unit, a current flowing through the first switching element may be reduced, and the heat generation of the first switching element may be prevented.
(2) The power supply unit of an aerosol generation device according to (1), in which
   the first switching element and the second switching element connect the power supply and the heating unit connector to constitute a charging power supply system for charging the power supply with power of the external power supply supplied via the external power supply connector.
   According to (2), the first switching element and the second switching element connected in parallel connect the power supply and the external power supply connector to constitute a charging power supply system for charging the power supply with the power of the external power supply supplied via the external power supply connector. Accordingly, when the power supply is charged with the power of the external power supply, the current flowing through the first switching element may be reduced, and the heat generation of the first switching element may be prevented.
(3) The power supply unit of an aerosol generation device according to (2), in which
   the first switching element and the second switching element constitute a step-down circuit that steps down the power of the external power supply and outputs the stepped-down power to the power supply in the charging power supply system.
   According to (3), the first switching element and the second switching element connected in parallel constitute a step-down circuit that steps down the power of the external power supply and outputs the stepped-down power to the power supply in the charging power supply system. Accordingly, when the power of the external power supply is stepped down, the current flowing through the first switching element may be reduced, and the heat generation of the first switching element may be prevented.
(4) The power supply unit of an aerosol generation device according to (3), further including:
   a control device (MCU 50) configured to control the first switching element and the second switching element, in which
   the control device operates only one of the first switching element and the second switching element when power for charging the power supply is equal to or lower than a first threshold, and operates both the first switching element and the second switching element when the power for charging the power supply is larger than the first threshold.

   According to (4), the control device operates only one of the first switching element and the second switching element when the power for charging the power supply is relatively small, and operates both the first switching element and the second switching element when the power for charging the power supply is relatively large. Accordingly, when the power supply is charged, an appropriate number of switching elements may be operated according to the power for charging the power supply. Accordingly, it is possible to prevent the first switching element and the second switching element from being high temperature when charging the power supply while preventing an increase in power consumption of the power supply unit, and it is possible to reduce the risk of the degradation or breakage of electronic components provided in the power supply unit or an unstable operation of the power supply unit.
(5) The power supply unit of an aerosol generation device according to (2), in which
   the first switching element and the second switching element control a current value or a voltage value of power for charging the power supply in the charging power supply system.
   According to (5), the first switching element and the second switching element connected in parallel control a current value or a voltage value of power for charging the power supply in the charging power supply system. Accordingly, the current flowing through the first switching element when the current value or the voltage value of the power for charging the power supply is controlled may be reduced, and the heat generation of the first switching element may be prevented.
(6) The power supply unit of an aerosol generation device according to (5), further including:
   a control device (MCU 50) configured to control the first switching element and the second switching element, in which
   the control device operates only one of the first switching element and the second switching element when the power for charging the power supply is equal to or lower than a first threshold, and operates both the first switching element and the second switching element when the power for charging the power supply is larger than the first threshold.

   According to (6), the control device operates only one of the first switching element and the second switching element when the power for charging the power supply is equal to or smaller than the first threshold, and operates both the first switching element and the second switching element when the power for charging the power supply is larger than the first threshold. Accordingly, when the power supply is charged, an appropriate number of switching elements may be operated according to the power for charging the power supply. Accordingly, it is possible to prevent the first switching element and the second switching element from being high temperature when charging the power supply while preventing an increase in power consumption of the power supply unit, and it is possible to reduce the risk of the degradation or breakage of electronic components provided in the power supply unit or an unstable operation of the power supply unit.
(7) The power supply unit of an aerosol generation device according to (6), in which
   the power supply unit charges the power supply with first power when a temperature of the power supply is equal to or lower than a threshold, and charges the power supply with second power larger than the first power when the temperature of the power supply is higher than the threshold, and
   the control device operates only one of the first switching element and the second switching element when the power supply is charged with the first power, and operates both the first switching element and the second switching element when the power supply is charged with the second power.

   According to (7), the power supply unit charges the power supply with the first power when a temperature of the power supply is equal to or lower than a threshold, and charges the power supply with the second power larger than the first power when the temperature of the power supply is higher than the threshold. The control device operates only one of the first switching element and the second switching element when the power supply is charged with the first power, and operates both the first switching element and the second switching element when the power supply is charged with the second power. Accordingly, it is possible to charge the power supply with appropriate power according to the temperature of the power supply, and it is possible to avoid deterioration of the power supply caused by charging the power supply with large power when a temperature of a battery is low. In addition, it is possible to operate an appropriate number of switching elements according to the power for charging the power supply when charging the power supply, it is possible to avoid the first switching element and the second switching element from becoming high in temperature when charging the power supply while preventing an increase in power consumption of the power supply unit, and it is possible to reduce the risk of deterioration or breakage of electronic components provided in the power supply unit or an unstable operation of the power supply unit.
(8) The power supply unit of an aerosol generation device according to (6), in which
   the power supply unit charges the power supply with first power when an output voltage of the power supply is equal to or lower than a threshold, and charges the power supply with second power larger than the first power when the output voltage of the power supply is higher than the threshold, and
   the control device operates only one of the first switching element and the second switching element when the power supply is charged with the first power, and operates both the first switching element and the second switching element when the power supply is charged with the second power.

   According to (8), the power supply unit charges the power supply with the first power when an output voltage of the power supply is equal to or lower than a threshold, and charges the power supply with the second power larger than the first power when the output voltage of the power supply is higher than the threshold. The control device operates only one of the first switching element and the second switching element when the power supply is charged with the first power, and operates both the first switching element and the second switching element when the power supply is charged with the second power. Accordingly, the power supply may be charged with appropriate power corresponding to the output voltage of the power supply, and the power supply unit may be prevented from being damaged by the inrush current when the output voltage of the power supply is low. In addition, it is possible to operate an appropriate number of switching elements according to the power for charging the power supply when charging the power supply, it is possible to avoid the first switching element and the second switching element from becoming high in temperature when charging the power supply while preventing an increase in power consumption of the power supply unit, and it is possible to reduce the risk of deterioration or breakage of electronic components provided in the power supply unit or an unstable operation of the power supply unit.
(9) The power supply unit of an aerosol generation device according to (1), in which
   the first switching element and the second switching element connect the power supply and the heating unit connector to constitute a heating unit power supply system for supplying power of the power supply to the heating unit.
   According to (9), the first switching element and the second switching element connected in parallel connect the power supply and the heating unit connector to constitute a heating unit power supply system for supplying the power of the power supply to the heating unit. Accordingly, it is possible to reduce the current flowing through the first switching element when the power of the power supply is supplied to the heating unit, prevent the heat generation of the first switching element, and reduce the risk of deterioration or breakage of electronic components provided in the power supply unit or an unstable operation of the power supply unit.
(10) The power supply unit of an aerosol generation device according to (9), in which
   the first switching element and the second switching element constitute a step-up circuit that steps up the power of the power supply and outputs the stepped-up power to the heating unit in the heating unit power supply system.
   According to (10), the first switching element and the second switching element connected in parallel constitute a step-up circuit that steps up the power of the power supply and outputs the stepped-up power to the heating unit in the heating unit power supply system. Accordingly, it is possible to reduce the current flowing through the first switching element when the power of the power supply is stepped up, prevent the heat generation of the first switching element, and reduce the risk of deterioration or breakage of electronic components provided in the power supply unit or an unstable operation of the power supply unit.
(11) The power supply unit of an aerosol generation device according to (10), further including:
   a control device (MCU 50) configured to control the first switching element and the second switching element, in which
   the control device operates only one of the first switching element and the second switching element when power supplied to the heating unit is relatively small, and operates both the first switching element and the second switching element when the power supplied to the heating unit is relatively large.

   According to (11), the control device operates only one of the first switching element and the second switching element when the power supplied to the heating unit is relatively small, and operates both the first switching element and the second switching element when the power supplied to the heating unit is relatively large. Accordingly, when the power is supplied to the heating unit, an appropriate number of switching elements may be operated according to the power supplied to the heating unit. Accordingly, it is possible to prevent the first switching element and the second switching element from being high temperature when supplying the power to the heating unit while preventing an increase in power consumption of the power supply unit, and it is possible to reduce the risk of the degradation or breakage of electronic components provided in the power supply unit or an unstable operation of the power supply unit.
(12) The power supply unit of an aerosol generation device according to (11), in which
   the power supply unit supplies first power to the heating unit during a predetermined period immediately after startup and supplies second power smaller than the first power to the heating unit after the elapse of the predetermined period, and
   the control device operates both the first switching element and the second switching element when the first power is supplied to the heating unit, and operates only one of the first switching element and the second switching element when the second power is supplied to the heating unit.
(12) According to this configuration, the power supply unit supplies the first power to the heating unit during a predetermined period immediately after startup, and supplies the second power smaller than the first power to the heating unit after the elapse of the predetermined period. The control device operates both the first switching element and the second switching element when the first power is supplied to the heating unit, and operates only one of the first switching element and the second switching element when the second power is supplied to the heating unit. Accordingly, when the power supply unit is started up, the aerosol may be quickly generated, and the convenience for the user may be improved. In addition, it is possible to operate an appropriate number of switching elements according to the power supplied to the heating unit when the power is supplied to the heating unit, it is possible to avoid the first switching element and the second switching element from becoming high in temperature when the power is supplied to the heating unit while preventing an increase in power consumption of the power supply unit, and it is possible to reduce the risk of deterioration or breakage of electronic components provided in the power supply unit or an unstable operation of the power supply unit.
(13) The power supply unit of an aerosol generation device according to any one of (1) to (12), further including:
   a third switching element connected in parallel to the first switching element and the second switching element.

According to (13), when the power supply is charged with the power of the external power supply or when the power of the power supply is supplied to the heating unit, it is possible to further reduce the current flowing through the first switching element and further prevent the heat generation of the first switching element, and it is possible to reduce the risk of deterioration or breakage of electronic components provided in the power supply unit or an unstable operation of the power supply unit.

### REFERENCE SIGNS LIST

1: aerosol inhalation device (aerosol generation device)
10: power supply unit
12: power supply
22: aerosol source
41: discharge terminal (heating unit connector)
43: charging terminal (external power supply connector)
50: MCU (control device)
102: second FET (first switching element)
103: third FET (first switching element)
104: fourth FET (first switching element)
105: fifth FET (second switching element)
106: sixth FET (second switching element)
107: seventh FET (second switching element)

## Claims

1. A power supply unit of an aerosol generation device, comprising:
a power supply;
a heating unit connector to which a heating unit configured to heat an aerosol source by consuming power supplied from the power supply is connected;
an external power supply connector connectable to an external power supply;
a first switching element; and
a second switching element connected in parallel to the first switching element, wherein
the first switching element and the second switching element connected in parallel connect the power supply and the external power supply connector or the heating unit connector.

2. The power supply unit of an aerosol generation device according to claim 1, wherein
the first switching element and the second switching element connect the power supply and the heating unit connector to constitute a charging power supply system for charging the power supply with power of the external power supply supplied via the external power supply connector.

3. The power supply unit of an aerosol generation device according to claim 2, wherein
the first switching element and the second switching element constitute a step-down circuit that steps down the power of the external power supply and outputs the stepped-down power to the power supply in the charging power supply system.

4. The power supply unit of an aerosol generation device according to claim 3, further comprising:
a control device configured to control the first switching element and the second switching element, wherein
the control device operates only one of the first switching element and the second switching element when power for charging the power supply is equal to or lower than a first threshold, and operates both the first switching element and the second switching element when the power for charging the power supply is larger than the first threshold.

5. The power supply unit of an aerosol generation device according to claim 2, wherein
the first switching element and the second switching element control a current value or a voltage value of power for charging the power supply in the charging power supply system.

6. The power supply unit of an aerosol generation device according to claim 5, further comprising:
a control device configured to control the first switching element and the second switching element, wherein
the control device operates only one of the first switching element and the second switching element when the power for charging the power supply is equal to or lower than a first threshold, and operates both the first switching element and the second switching element when the power for charging the power supply is larger than the first threshold.

7. The power supply unit of an aerosol generation device according to claim 6, wherein
the power supply unit charges the power supply with first power when a temperature of the power supply is equal to or lower than a threshold, and charges the power supply with second power larger than the first power when the temperature of the power supply is higher than the threshold, and
the control device operates only one of the first switching element and the second switching element when the power supply is charged with the first power, and operates both the first switching element and the second switching element when the power supply is charged with the second power.

8. The power supply unit of an aerosol generation device according to claim 6, wherein
the power supply unit charges the power supply with first power when an output voltage of the power supply is equal to or lower than a threshold, and charges the power supply with second power larger than the first power when the output voltage of the power supply is higher than the threshold, and
the control device operates only one of the first switching element and the second switching element when the power supply is charged with the first power, and operates both the first switching element and the second switching element when the power supply is charged with the second power.

9. The power supply unit of an aerosol generation device according to claim 1, wherein
the first switching element and the second switching element connect the power supply and the heating unit connector to constitute a heating unit power supply system for supplying power of the power supply to the heating unit.

10. The power supply unit of an aerosol generation device according to claim 9, wherein
the first switching element and the second switching element constitute a step-up circuit that steps up the power of the power supply and outputs the stepped-up power to the heating unit in the heating unit power supply system.

11. The power supply unit of an aerosol generation device according to claim 10, further comprising:
a control device configured to control the first switching element and the second switching element, wherein
the control device operates only one of the first switching element and the second switching element when power supplied to the heating unit is relatively small, and operates both the first switching element and the second switching element when the power supplied to the heating unit is relatively large.

12. The power supply unit of an aerosol generation device according to claim 11, wherein
the power supply unit supplies first power to the heating unit during a predetermined period immediately after startup and supplies second power smaller than the first power to the heating unit after the elapse of the predetermined period, and
the control device operates both the first switching element and the second switching element when the first power is supplied to the heating unit, and operates only one of the first switching element and the second switching element when the second power is supplied to the heating unit.

13. The power supply unit of an aerosol generation device according to any one of claims 1 to 12, further comprising:
a third switching element connected in parallel to the first switching element and the second switching element.
